# FASCICULE DE BREVET EUROPEEN

(11) **EP 1 687 123 B1**
(45) Date de publication et mention de la délivrance du brevet: **13.06.2007**
(21) Numéro de dépôt: 04805399.5
(22) Date de dépôt: 05.11.2004
(51) Int. Cl.: B25J 9/00

(54) **SYSTEME D EXOSQUELETTE POUR SEGMENT BIOLOGIQUE A MOUVEMENT P ROPORTIONNEL ET ASSEMBLAGE EXOSQUELETTIQUE DE TELS SYSTEMES**
EXOSKELETTSYSTEM FÜR EIN BIOLOGISCHES SEGMENT MIT PROPORTIONALER BEWEGUNG UND EXOSKELETTANORDNUNG DER SYSTEME
EXOSKELETON SYSTEM FOR A PROPORTIONAL MOVEMENT BIOLOGICAL SEGMENT AND EXOSKELETON ASSEMBLY OF A SAID SYSTEMS

(30) Priorité: 07.11.2003 FR 0313087
(43) Date de publication de la demande: 09.08.2006
(73) Titulaire: Wotan Systems, 69001 Lyon (FR)
(72) Inventeur: SADOK, Patrick, F-69001 Lyon (FR); ARNOUD, Christian, F-58170 Luzy (FR); ACHARD DE GOULANDRE, Jean-François, F-69002 Lyon (FR)
(74) Mandataire: Le Cacheux, Samuel L.R.
(86) Numéro de dépôt international: PCT/FR2004/002850
(87) Numéro de publication internationale: WO 2005/046941

(56) Documents cités:
- WO-A-95/32842
- US-A- 3 449 769
- US-A1- 2003 115 954
- PATENT ABSTRACTS OF JAPAN vol. 2003, no. 04, 2 avril 2003 (2003-04-02) -& JP 2002 346960 A (JAPAN SCIENCE & TECHNOLOGY CORP), 4 décembre 2002 (2002-12-04)
- YANAMOTO K ET AL: "VESTITO MOTORIZZATO PER ASSISTERE IL LAVORO DELL'INFERMIERA" OLEODINAMICA, PNEUMATICA, TECNICHE NUOVE. MILANO, IT, vol. 38, no. 12, 1 décembre 1998 (1998-12-01), pages 82-88, XP000734464 ISSN: 1122-5017

## Description

La présente invention concerne le domaine technique de l'assistance en soutien et motricité de segments biologiques en particulier d'un membre d'une personne par l'intermédiaire d'un dispositif appelé exosquelette.

D'une manière classique, un système exosquelettique de membre telle une orthèse, assiste le membre biologique d'un utilisateur en le délestant partiellement voire complètement de son propre poids et des efforts qu'il exerce. Un exosquelette de membre permet de suppléer à une déficience de mobilité du membre ou bien d'en amplifier les performances.

Dans l'état de la technique, il a été proposé diverses réalisations de systèmes d'exosquelette. Par exemple, le brevet US 3 358 678 décrit un dispositif exosquelettique destiné à être enfilé tel qu'un vêtement, par l'utilisateur. Un tel dispositif est piloté par des séquences préprogrammées pour maintenir la personne dans une position droite stable. Il s'avère difficile en pratique, voire impossible, pour une personne handicapée de s'équiper d'une telle structure exosquelettique qui présente un caractère fermé. De plus, un tel dispositif permet uniquement un maintien stable d'une personne de sorte qu'un tel dispositif ne permet pas d'assister les membres de la personne en fonction de sa volonté de mouvement.

Le brevet US 2003 11 59 54 décrit une structure exosquelettique dont le champ d'application est limité aux tests et aux exercices destinés aux membres supérieurs. La structure exosquelettique est dotée d'un dispositif d'actionnement mécanique du type à contrepoids. Un tel dispositif présente un encombrement et une masse qui imposent à l'ensemble un caractère stationnaire, justifiant par la même la limitation du champ d'application. Par ailleurs, l'utilisation de contrepoids réalisant par définition des efforts à couple constant ne permet pas l'exécution de mouvements naturels.

Le brevet WO/95 32 842 décrit un appareillage externe destiné à être attaché à un membre sur les segments duquel il exercera des couples. Un tel dispositif ne comportant pas, dans sa définition, de structure porteuse (par exemple sur le buste ou le bassin) par rapport à laquelle les couples s'exercent sur le membre, il ne peut donc pas être appliqué à des mouvements tels que l'abduction du bras par exemple.

Le brevet JP 2002 346 960 décrit un système mécanique figé et précis comportant un nombre déterminé de segments et d'articulations empêchant par la même l'adaptabilité à une application ou une pathologie particulière. Le processeur pilotant la motricité de ce système ne tient pas compte de paramètres propres à l'utilisateur et à son champ d'activités mais utilise comme seules informations, des valeurs pré-définies variant en fonction des positions angulaires et des signaux de force. Un tel système présente donc des aléas de précision dans la gestion de la vitesse et de la force puisque ces paramètres varient d'un utilisateur à l'autre.

Le brevet US 3 449 769 décrit un système d'exosquelette comportant une structure porteuse exosquelettique équipée de moyens d'adaptation sur la personne et composée d'une structure de référence supportant une série de segments mécaniques reliés entre eux et à la structure de référence, par l'intermédiaire d'articulations mécaniques. Un tel système d'exosquelette comporte également des capteurs d'acquisition des mouvements des segments biologiques et des capteurs d'acquisition de la position spatiale des segments mécaniques. De tels capteurs sont reliés en entrée, à des moyens de commande qui sont reliés en sortie, à des moteurs fluidiques pilotés en tout ou rien pour assurer le déplacement des segments mécaniques. Il ressort qu'un tel système d'exosquelette ne permet pas de reproduire les mouvements naturels des membres et soumet ainsi les articulations biologiques à des contraintes néfastes. De plus, les mouvements du système d'exosquelette ne peuvent pas être adaptés à la pathologie de l'utilisateur ni même à la volonté de mouvement de l'utilisateur.

La présente invention vise donc à remédier aux inconvénients de l'état de la technique en proposant un système d'exosquelette assurant l'assistance en soutien et motricité des segments biologiques d'une personne, cette assistance s'adaptant au mieux aux caractéristiques biomécaniques et pathologiques de la personne ainsi qu'à ses volontés de mouvement et à son champ d'activités.

Pour atteindre un tel objectif, l'objet de l'invention concerne un système d'exosquelette comportant :
- une structure porteuse exosquelettique équipée de moyens d'adaptation sur la personne et composée d'une structure de référence et d'au moins un segment mécanique relié à la structure de référence par une articulation mécanique,
- des moyens d'acquisition des mouvements des segments biologiques,
- des moyens d'acquisition de la position spatiale des segments mécaniques par rapport à la structure de référence,
- des moyens d'actionnement assurant la motricité des segments mécaniques articulés,
- et des moyens de commande reliés en entrée aux moyens d'acquisition de mouvements et de positions, et en sortie aux moyens d'actionnement pour assurer leur pilotage.
Conformément à l'invention :
- lesdits moyens d'acquisition des mouvements acquièrent aussi les volontés de mouvements et sont constitués par des moyens de mesure en fonction du temps, de l'effort provenant d'au moins un segment biologique et des moyens de détection en fonction du temps, de la direction des mouvements ou volontés de mouvements de ces segments,
- lesdits moyens de commande comportent :
   * des paramètres d'asservissement propres à la personne et à son champ d'activités, et des paramètres propres à la configuration de l'exosquelette,
   * des moyens de traitement qui, en fonction desdits paramètres et des informations issues desdits moyens d'acquisition des mouvements ou volontés de mouvements, déterminent proportionnellement, des caractéristiques de vitesse, d'accélération, de décélération et d'effort pour lesdits moyens d'actionnement,
   * et des moyens de pilotage permettant de commander lesdits moyens d'actionnement, selon des caractéristiques de vitesse, d'accélération, de décélération et d'effort préalablement déterminés par lesdits moyens de traitement.

Selon une caractéristique avantageuse, les paramètres d'asservissement propres à la personne et à son champ d'activités comportent les caractéristiques biomécaniques et pathologiques de la personne afin de déterminer les facteurs de proportionnalité d'amplification de motricité, et éventuellement d'atténuation, voire de suppression des mouvements involontaires.

Avantageusement, les paramètres d'asservissement comportent des coefficients de limitation d'amplitude des mouvements de la personne.

Par ailleurs, il est à noter que le brevet US 3 449 769 décrit une structure exosquelettique dont les différents segments mécaniques sont articulés les uns par rapport aux autres par des liaisons pivots simples dont les axes sont successivement parallèles ou perpendiculaires. Pour la restitution du mouvement articulaire complexe comme celui de l'abduction du bras humain autour de l'axe de l'épaule, il est prévu de le décomposer en trois liaisons pivots successives dont les deux axes extrêmes sont parallèles l'un par rapport à l'autre et celui du milieu est perpendiculaire aux deux autres. Il est à noter toutefois qu'une abduction du bras de plus de 130 degrés alors que le bras peut tolérer 180 degrés, provoque l'entrée en collision du moteur avec la tête de l'utilisateur. Dans le même sens, la simplification de l'articulation du genou à un axe horizontal tel que le préconise le brevet US 3 449 769 conduit à des contraintes indésirables et des frictions en raison de l'existence de l'angle de valgus physiologique du genou. Un tel système d'exosquelette qui comporte des axes d'articulation ne correspondant pas à la réalité biologique ne peut pas être utilisé en raison des efforts appliqués sur les segments osseux entraînant des frictions indésirables entre le membre et la structure exosquelettique, voire même des lésions.

Dans le même sens, le brevet US 5 282 460 décrit un système d'exosquelette comportant une articulation à trois axes mutuellement perpendiculaires et concourant en un point. Une telle articulation exosquelettique entraîne indubitablement des contraintes au niveau des articulations biologiques de l'utilisateur.

Il apparaît donc le besoin de disposer d'un système d'exosquelette dont la structure exosquelettique peut s'adapter au mieux aux segments biologiques et aux articulations biologiques d'une personne.

Pour atteindre un tel objectif, chaque articulation mécanique liant deux segments mécaniques ou un segment mécanique par rapport à la structure de référence comporte :
- des moyens de réglage de sa position par rapport à la structure de référence ou à un autre segment, afin de permettre son positionnement en correspondance de l'articulation biologique,
- pour chaque articulation mécanique correspondant à une articulation biologique à l'exception de celle de l'épaule, autant de liaison pivot que l'articulation biologique comporte de degrés de liberté,
- pour l'articulation mécanique correspondant à l'articulation de l'épaule, quatre degrés de liberté réalisés par deux liaisons pivot et une liaison pivot glissant radialement.

Avantageusement, chaque liaison pivot est réalisée par un système de guidage à arbre ou par un système de guidage sans arbre.

Avantageusement, chaque articulation d'un segment mécanique est pourvue, pour chaque degré de liberté d'une articulation biologique à au moins trois degrés de liberté, d'au moins une liaison pivot réalisée par un système de guidage sans arbre, tandis que les autres liaisons pivot sont réalisées chacune par un système de guidage à arbre.

De préférence, le système de guidage sans arbre est réalisé par au moins un tronçon de rail circulaire assurant le guidage d'au moins un patin mobile.

Avantageusement, la liaison pivot glissant radialement est composée soit de plusieurs axes de rotation successifs permettant de restituer une trajectoire proche de celle du glissement de l'axe de rotation biologique soit d'un guide doté d'une empreinte dans laquelle l'axe de la liaison pivot décrit une trajectoire semblable à ce glissement.

Selon des exemples préférés de réalisation, les moyens d'acquisition des mouvements ou volontés de mouvements comportent :
- des jauges de contraintes montées en opposition sur une partie fixe liée à la structure porteuse, en étant sollicitées par une partie mobile reliée à un segment biologique,
- et/ou des moyens de mesure des stimuli neuro-musculaires envoyés par la personne à ses muscles.

Un autre objet de l'invention est de proposer une structure porteuse exosquelettique pouvant être adaptée facilement sur un utilisateur tout en portant les différents capteurs de mesure.

Pour atteindre un tel objectif, les moyens d'adaptation sur la personne sont constitués par une partie fixe et une partie mobile concentriques et constituées chacune de deux demi-coques articulées axialement entre elles pour permettre l'insertion radiale d'un segment biologique.

Selon une caractéristique préférée de réalisation, chaque demi-coque de la partie mobile supporte une membrane adaptable destinée à être en contact avec le segment biologique et à s'adapter à la morphologie dudit segment biologique.

Avantageusement, les moyens d'actionnement sont constitués par des muscles pneumatiques ou par des vérins linéaires pneumatiques.

De préférence, la structure porteuse comporte des butées réglables de limitation de l'amplitude de déplacement des segments mécaniques articulés.

Il est à noter que les moyens de commande comportent des moyens programmés permettant de piloter le fonctionnement de la structure porteuse exosquelettique selon des séquences déterminées.

Par ailleurs, les moyens de commande sont reliés de préférence, à des interfaces d'entrée-sortie permettant de piloter et de surveiller notamment à distance le fonctionnement dudit système d'exosquelette.

Avantageusement, au moins un segment mécanique ou bien la structure de référence est équipé de moyens de montage pour des structures additionnelles.

Le système d'exosquelette selon l'invention comporte une source d'énergie alimentant les moyens de commande, d'acquisition et d'actionnement, portée par la structure porteuse exosquelettique et se présentant sous une forme stockable telle qu'une batterie ou une pile à combustible ou étant située à proximité de celle-ci pour l'alimenter par le biais d'un faisceau de raccordement ou par induction.

Avantageusement, la structure porteuse exosquelettique assure l'assistance d'un segment biologique d'un membre, du tronc ou du bassin d'une personne.

Un autre objet de l'invention est de proposer un assemblage exosquelettique comportant plusieurs systèmes d'exosquelettes conformes à l'invention et assemblés par leur structure de référence, sur une structure d'exosquelette de tronc et/ou de bassin afin de constituer une structure exosquelettique partielle ou complète assurant de manière partielle ou complète, le soutien et la motricité de divers segments biologiques d'une personne.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective montrant un exemple de réalisation d'un système d'exosquelette pour le membre supérieur droit d'une personne assise dans un fauteuil roulant.
La **Figure 2** est un schéma bloc fonctionnel des moyens de commande du système d'exosquelette conforme à l'invention.
Les **Figures 3** et **4** représentent des courbes d'effort en fonction du temps illustrant certaines caractéristiques du système d'exosquelette conforme à l'invention.
Les **Figures 5** et **6** sont des vues simplifiées en perspective d'un système d'exosquelette pour le membre supérieur droit d'une personne dont les moyens d'actionnement ont été occultés pour simplifier la représentation.
Les **Figures 7A** et **7B** sont des schémas cinématiques illustrant le mouvement de l'abduction du bras.
Les **Figures 7C** et **7D** sont des vues schématiques explicitant des caractéristiques du système d'exosquelette selon l'invention.
Les **Figures 8A** et **8B** sont des schémas cinématiques illustrant le mouvement de flexion-extension du bras.
La **Figure 9A** est un schéma cinématique illustrant le mouvement de rotation par rapport à l'axe longitudinal du bras.
La **Figure 9B** est une représentation cinématique schématique du système d'exosquelette illustré aux **Fig. 5** et **6.**
La **Figure 9C** est un schéma cinématique illustrant le mouvement de rotation de l'avant-bras autour de l'axe du coude.
La **Figure 10** est une représentation cinématique schématique d'un système d'exosquelette pour le membre inférieur d'une personne.
La **Figure 11** illustre une variante préférée de réalisation en position ouverte de moyens d'adaptation du système d'exosquelette selon l'invention sur un membre biologique.
La **Figure 12** illustre une variante préférée de réalisation en position fermée des moyens d'adaptation du système d'exosquelette selon l'invention représentés à la **Fig. 11.**
La **Figure 13** est une vue en coupe partielle longitudinale prise sensiblement selon les lignes **AA** de la **Fig. 12.**

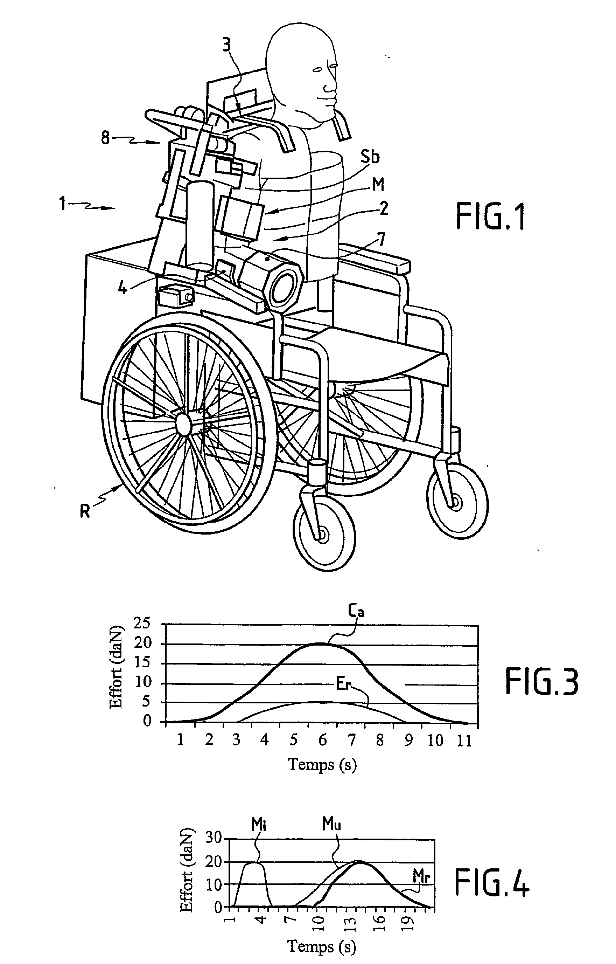

L'objet de l'invention concerne un système d'exosquelette **1** destiné à assister au moins un segment biologique **S_{b}** d'une partie **M** d'une personne dans ses mouvements en la délestant de tout ou partie des efforts qu'elle exerce pour réaliser des tâches, voire pour la soulager de son poids propre ou encore pour amplifier ses capacités. Il doit être compris que le système d'exosquelette **1** selon l'invention est destiné à assurer, d'une manière préférée, l'assistance d'un ou de plusieurs segments biologiques du ou des membres supérieurs tels que l'épaule, le bras, l'avant-bras ou le poignet mais également un ou plusieurs segments biologiques du ou des membres inférieurs tels que la hanche, la cuisse, la jambe ou le pied. Cependant, même si la description qui suit vise l'assistance d'un segment biologique d'un membre d'une personne, le système d'exosquelette **1** selon l'invention peut être adapté pour assister, en tant que partie **M** de la personne, le tronc, le bassin d'une personne. Dans l'exemple illustré à la **Fig. 1,** le système d'exosquelette **1** assure l'assistance du bras et de l'avant-bras droits d'une personne assise dans un fauteuil roulant **R.**

Le système d'exosquelette **1** selon l'invention comporte une structure porteuse exosquelettique **2,** composée d'une structure de référence **3** et d'au moins un segment mécanique **4** destiné à équiper un segment biologique **S_{b}** d'un membre d'une personne. Dans l'exemple illustré où le système d'exosquelette **1** est destiné à assurer l'assistance de l'épaule, du bras et de l'avant-bras droits, le système d'exosquelette **1** comporte deux segments mécaniques **4.** Chaque segment mécanique **4** est monté sur un segment biologique **S_{b}** correspondant, à l'aide de moyens d'adaptation **7** dont un exemple préféré de réalisation sera illustré dans la suite de la description. Une articulation mécanique **8** est montée entre chaque segment mécanique 4 adjacent et entre la structure de référence **3** et le segment mécanique voisin **4**.

Il est à noter que la structure de référence **3** est considérée fixe par rapport au(x) segment(s) mécanique(s) ayant la vocation d'être mobile. Cette structure de référence **3** peut être ainsi supportée, soit par la personne avec une possibilité de mouvement ou non, soit par une structure porteuse voisine à la personne tel qu'un fauteuil roulant par exemple.

Tel que cela ressort plus précisément de la **Fig. 2,** le système d'exosquelette 1 comporte également des moyens **11** permettant d'acquérir les mouvements et les volontés de mouvements des segments biologiques **S_{b}**. Ces moyens d'acquisition **11** sont constitués par des moyens assurant d'une part, la mesure en fonction du temps, de l'effort provenant d'au moins un segment biologique **S_{b}** et d'autre part, la détection en fonction du temps de la direction des mouvements ou volonté de mouvements de ces segments biologiques.

Selon une variante préférée de réalisation, ces moyens d'acquisition **11** comportent des jauges de contrainte **12** montées en opposition sur une partie fixe liée à la structure porteuse **2** et en étant sollicitée par une partie mobile fixée à un segment biologique **S_{b}**. Selon une autre variante de réalisation, les moyens d'acquisition **11** comportent des moyens de mesure des stimuli neuro-musculaires envoyés par la personne à ses muscles.

Il doit être compris que ces moyens d'acquisition **11** permettent de déterminer en fonction du temps, l'effort exercé par le segment biologique ainsi que sa direction de mouvement ou dans le cas où le segment biologique n'est pas déplacé dans l'espace, par la volonté de mouvement de la personne.

Le système d'exosquelette **1** comporte également des moyens **15** permettant d'acquérir la position spatiale des segments mécaniques **4** par rapport à la structure de référence **3.** Ces moyens d'acquisition **15** comportent par exemple des codeurs **16** de position angulaire.

Le système d'exosquelette **1** comporte également des moyens de commande **17** reliés en entrée, aux moyens d'acquisition de mouvements **11** et de position **15** et en sortie, à des moyens d'actionnement **19** assurant l'assistance en soutien et en motricité des segments mécaniques **4.**

Les moyens de commande **17** comportent des paramètres d'asservissement propres à la personne et à son champ d'activités ainsi que des paramètres propres à la configuration de l'exosquelette.

Les paramètres d'asservissement propres à la personne et à son champ d'activités concernent en particulier les mensurations de chaque membre biologique afin de déterminer leur volume, ce qui permet aux moyens de commande de déterminer la masse et par suite l'inertie de chaque membre biologique. L'inertie ayant tendance à générer une résistance s'opposant au mouvement, sa valeur doit être intégrée dans l'interprétation réalisée par les moyens de traitement **17.**

Ces paramètres d'asservissement peuvent concerner également éventuellement les caractéristiques biomécaniques d'une personne souffrant d'un handicap moteur. Ainsi, tel que cela est illustré à la **Fig. 3,** dans le cas d'un membre souffrant de déficience de capacité de motricité permanente ou momentanée, il peut être effectué une mesure précise de son potentiel d'effort résiduel **Eᵣ** afin de compenser celui-ci en lui restituant des capacités biomécaniques supérieures à celles qui lui sont propres. Ainsi, il peut être obtenu une capacité augmentée **Cₐ** qui correspond à une amplification de motricité.

De même, il peut être envisagé dans le cas d'une rééducation d'un membre d'une personne, de définir un paramètre de rééducation: Dans ce cas, la personne souffre d'une motricité restreinte momentanée. Aussi, il peut être prévu une diminution progressive de l'assistance en puissance du système d'exosquelette et/ou une augmentation progressive de la vitesse du système d'exosquelette en fonction d'une part, du temps et d'autre part, de l'augmentation, au fur et à mesure de la rééducation, des capacités résiduelles de la personne.

La **Fig. 4** illustre un autre exemple d'un paramètre d'asservissement concernant le cas d'une personne souffrant de mouvements involontaires nommés « overboost ». Les mouvements de la personne sont quantifiés dans un premier temps afin de distinguer le mouvement volontaire **Mu** du mouvement involontaire **Mi.** Ensuite, le mouvement restitué **Mr** par le système d'exosquelette **1** permet d'atténuer, voire de supprimer le mouvement involontaire **Mi.**

Les paramètres d'asservissement propres au champ d'activités de la personne peuvent correspondre à des paramètres de charge fixe dans le cas où le système d'exosquelette reçoit des structures additionnelles tels que des éléments de protection lourds. Le système d'exosquellette selon l'invention agit alors comme un délesteur de charge en soulageant la personne de cette masse invalidante. La masse et le centre de gravité de chacun de ces éléments additionnels sont mesurés et consignés sous la forme de paramètres de charge fixe. De telles structures additionnelles peuvent être constituées de tenues pare-balles, pare-feu ou anti-écrasement par exemple.

Les paramètres d'asservissement propres au champ d'activités de la personne peuvent être également constitués par des paramètres de charge évolutive dans le cas où la personne utilise des appareils, des outillages, de l'armement, ou des accessoires divers nécessitant des mouvements très précis, des efforts très importants ou bien la manutention de charge lourde. Dans ce cas, le système d'exosquelette assure une augmentation des capacités de la personne dont le coefficient de multiplication sera dimensionné relativement aux besoins de la personne et à son champ d'activités.

Les paramètres de charge évolutive peuvent être également constitués par des facteurs d'accélérations ou de décélérations, de grandes valeurs dans le cas où le système d'exosquelette joue le rôle d'une tenue anti-G. Les moyens de commande **17** reçoivent en temps réel les informations liées à ces accélérations/décélérations en vue des les transformer en un coefficient multiplicateur d'efforts visant à s'opposer au facteur inertiel.

Il est à noter que les paramètres d'asservissement propres à la personne comportent des coefficients de limitation de l'amplitude du débattement des mouvements de la personne.

Les paramètres propres à la configuration de l'exosquelette sont constitués par les caractéristiques des divers composants de la structure porteuse exosquelettique **2,** telles que les dimensions, masses, centres de gravité, ainsi que par les caractéristiques des moyens d'acquisition **11** et **15,** de la puissance des moyens d'actionnement **19** et de l'énergie utilisée.

Selon une autre caractéristique de l'invention, les moyens de commande **17** comportent des moyens de traitement qui en fonction des paramètres d'asservissement propres à la personne et à son champ d'activités, des paramètres propres à la configuration de l'exosquelette et des informations issues des moyens d'acquisition **11** des mouvements ou volontés de mouvements, déterminent proportionnellement des caractéristiques de vitesse, d'accélération, de décélération et d'effort pour les moyens d'actionnement **19.**

Ces caractéristiques de vitesse, d'accélération, de décélération et d'effort déterminés pas ces moyens de traitement sont utilisés par des moyens de pilotage **20** pour permettre de commander les moyens d'actionnement **19** selon de telles caractéristiques de vitesse, d'accélération, de décélération et d'effort.

Il ressort de ce qui précède que le système d'exosquelette **1** selon l'invention met en oeuvre une relation de proportionnalité entre le mouvement émis ou souhaité par la personne et celui restitué par la structure porteuse exosquelettique. Ainsi, le mouvement de la structure porteuse exosquelettique est fonction des signaux de mouvements ou volontés de mouvements de la personne, des paramètres d'asservissement propres à la personne et à son champ d'activités ainsi que des paramètres propres à la configuration de l'exosquelette.

Ainsi, cette proportionnalité qualifie un mouvement généré par les moyens d'actionnement **19** et transmis à la structure porteuse exosquelettique **2,** dont les caractéristiques vitesse, accélération, décélération et effort sont fonction des informations d'entrée reçues par les moyens de commande **17.** Ces informations d'entrée sont ainsi corrigées par les divers paramètres décrits ci-dessus.

Il est à noter que les moyens de commande **17** peuvent faire partie d'un dispositif de commande **25** relié en entrée aux capteurs de mesure **12** et **16** et en sortie aux moyens de pilotage **19.** Il est clair qu'un tel dispositif de commande **25** peut intégrer les moyens de traitement des signaux délivrés par les capteurs **12** et **16** qui se trouvent dans cette hypothèse reliés en entrée au dispositif de commande **25.**

Un tel dispositif de commande **25** est équipé d'interfaces d'entrée et sortie **27** permettant de piloter et de contrôler le fonctionnement du système d'exosquelette. Ces interfaces d'entrée et sortie **27** peuvent être situées à distance ou dans l'environnement proche du système d'exosquelette en étant par exemple porté par la structure de référence **3** ou par un support voisin à la personne tel qu'un fauteuil roulant. Ces interfaces d'entrée et sortie **27** peuvent par exemple être réalisées par un boîtier de commande, par une interface homme/machine ou par un ordinateur relié par une liaison filaire ou non.

Il est à noter que les moyens de commande **17** comportent des moyens programmés permettant de piloter le fonctionnement de la structure porteuse exosquelettique **2** selon des séquences déterminées. Le déclenchement de telles séquences peut être réalisé par les interfaces d'entrée et sortie **27.**

Le système d'exosquelette **1** comporte également une source d'énergie **28** adaptée pour alimenter, à travers de préférence, un circuit de protection **29,** les divers éléments constitutifs du système d'exosquelette tels que les moyens d'acquisition **11** et **15,** les moyens d'actionnement **19** et les moyens de commande **17.** Cette source d'énergie peut se présenter sous une forme stockable telle qu'une batterie ou une pile à combustible portée par la structure porteuse exosquelettique et en particulier par la structure de référence **3.** Cette source d'énergie peut aussi être située à proximité du système d'exosquelette et alimenter les divers éléments constitutifs par le biais d'un faisceau de raccordement ou par induction.

Conformément à un autre aspect de l'invention, le système d'exosquelette **1** comporte une structure porteuse exosquelettique qui permet de respecter les mouvements bio-mécaniques de chaque segment biologique de la personne. Ainsi, chaque articulation mécanique **8** liant entre eux deux segments mécaniques **4** ou un segment mécanique **4** par rapport à la structure de référence **3** comporte des moyens de réglage de sa position par rapport à la structure de référence **3** ou à un autre segment mécanique **4** afin de permettre son positionnement en correspondance de l'articulation biologique. Il est entendu que le réglage de la position d'une articulation mécanique **8** implique d'une part, le réglage de la distance qui la sépare de l'articulation voisine et d'autre part, le réglage de l'inclinaison de chacun des axes qui constitue cette articulation mécanique.

Par ailleurs, chaque articulation mécanique **4** correspondant à une articulation biologique à l'exception de celle de l'épaule, comporte autant de liaisons pivot que l'articulation biologique comporte de degrés de liberté. En d'autres termes, en dehors de l'épaule, chaque degré de liberté d'une articulation biologique est réalisé par une liaison pivot qui par définition présente un degré de liberté en rotation. L'articulation mécanique correspondant à l'articulation de l'épaule, comporte quant à elle, quatre degrés de liberté réalisés par deux liaisons pivots et par une liaison pivot glissant radialement, correspondant à trois degrés de liberté en rotation et un degré de liberté en translation.

Chaque liaison pivot est réalisée par un système de guidage à arbre ou par un système de guidage sans arbre. Il est à noter qu'une liaison pivot peut être constituée, de plusieurs liaisons pivot partielles et coaxiales. Dans le cas d'une articulation biologique ne comportant pas plus de deux degrés de liberté tels que le coude, le poignet ou le genou, chaque degré de liberté de l'articulation mécanique correspondante est réalisée par une liaison pivot constituée par un système de guidage à arbre ou sans arbre. Dans le cas où l'articulation biologique comporte au moins trois degrés de liberté (l'épaule, la hanche ou le pied), au moins une des trois liaisons pivot est réalisée par un système de guidage sans arbre, tandis que les autres liaisons pivot sont réalisées chacune par un système de guidage à arbre.

Selon un aspect avantageux de l'invention, les liaisons pivot simples ou glissant sont placées dans une arborescence hiérarchique de mouvements où chacun est supporté par l'articulation mécanique qui le précède. Ainsi, le système d'exosquelette 1 selon l'invention se présente, pour le membre supérieur, comme la succession hiérarchique des mouvements suivants : l'abduction de l'épaule, la flexion-extension de l'épaule, la rotation longitudinale du bras autour de son axe, la flexion-extension du coude, la rotation longitudinale de l'avant-bras autour de son axe, la flexion-extension du poignet, et l'abduction/adduction du poignet. De même, pour le membre inférieur, le système d'exosquelette **1** selon l'invention se présente comme la succession hiérarchique des mouvements suivants : l'abduction de la hanche, la flexion-extension de la hanche, la rotation de la jambe autour de son axe longitudinal au niveau de la hanche, la flexion-extension du genou, la rotation de la jambe autour de son axe longitudinal au niveau du genou, l'abduction/adduction du pied, la flexion-extension du pied.

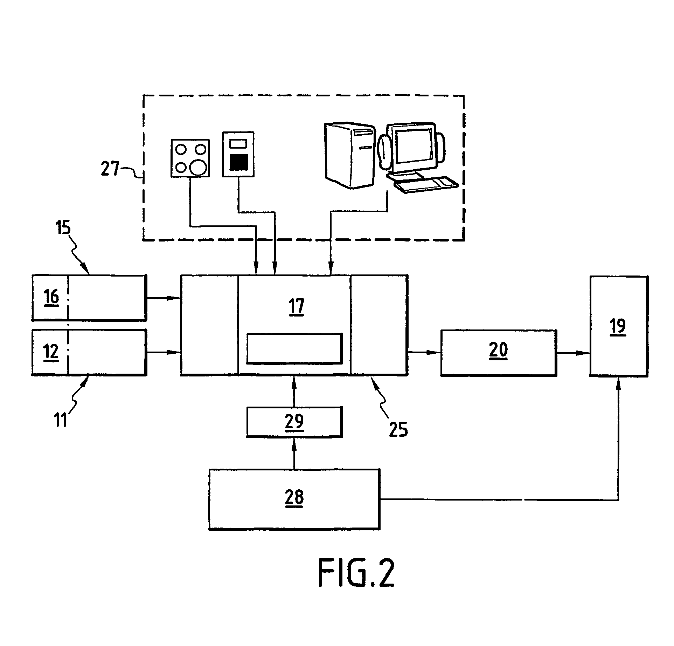

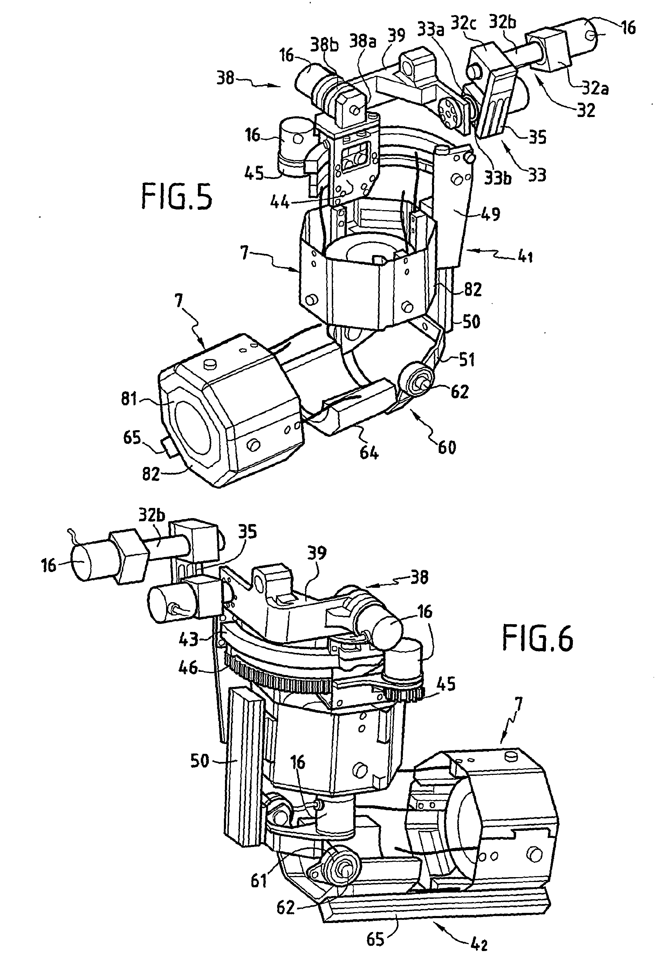

Les **Fig. 5** et **6** illustrent un exemple de réalisation d'un système d'exosquelette pour assister l'épaule, le bras et l'avant-bras droits d'une personne de sorte que les deux derniers mouvements liés au poignet ne sont pas assistés dans le système d'exosquelette illustré sur les dessins.

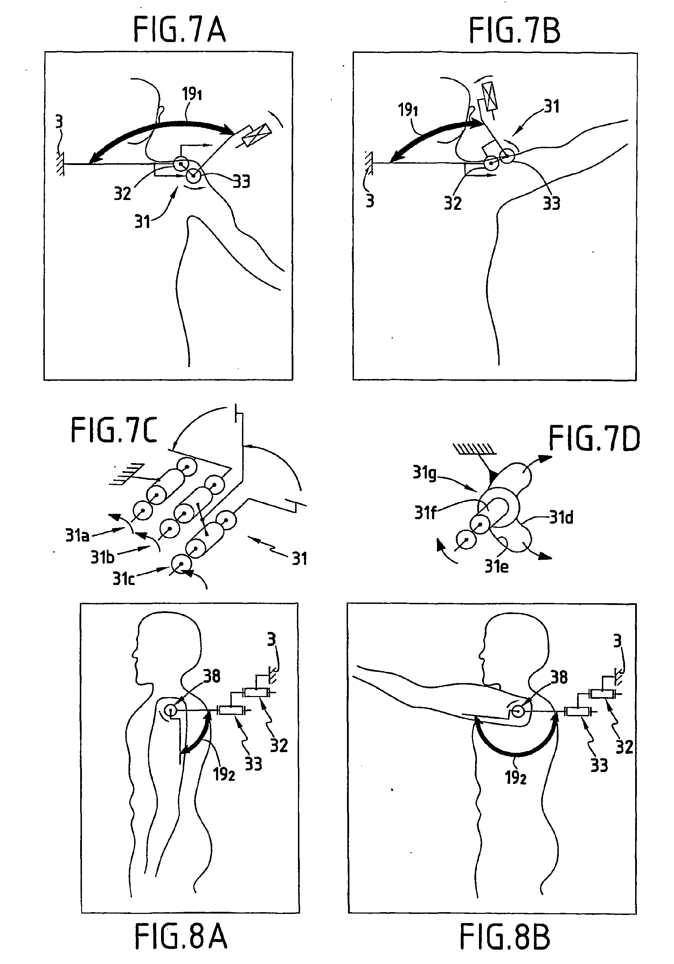

La rotation de l'épaule humaine correspondant au mouvement de l'abduction du bras **(Fig. 7A** et **7B)** est un mouvement de rotation combinée à un glissement de son centre instantané de rotation. Une simplification acceptable, biomécaniquement parlant, peut être la combinaison d'une rotation (de 0 à 90 degrés) puis d'un glissement et d'une rotation simultanés (de 90 à 180 degrés). Conformément à l'invention, ce mouvement de l'articulation de l'épaule est matérialisé par une liaison pivot glissant radialement **31.** Selon un exemple de réalisation illustré à la **Fig. 7C,** cette liaison pivot glissant radialement **31** peut être concrétisée par plusieurs axes de rotation de liaisons pivots simples **31a, 31b, 31c** montés successivement en série, permettant de restituer une trajectoire proche de celle du glissement de l'axe de rotation biologique. Il est à noter que cette liaison pivot glissant radialement **31** peut être réalisée d'une manière différente par l'intermédiaire, par exemple comme illustré à la **Fig. 7D,** d'un guide **31d** doté d'une empreinte **31e** dans laquelle un axe **31f** de rotation de la liaison pivot **31g** peut décrire une trajectoire radiale semblable au glissement souhaité.

Dans l'exemple de réalisation illustré aux **Fig. 5** et **6** et comme explicité ci-dessus, la liaison pivot glissant radialement **31** est concrétisée par deux liaisons pivots **32** et **33,** réalisées chacune par un système de guidage à arbre. D'une manière générale, chaque liaison pivot à arbre peut-être concrétisée par exemple, soit par des assemblages de type arbre plus logement, soit par des assemblages arbre plus logement doté d'équipements de roulement de tous types, soit par des assemblages arbre-logement doté de bagues comportant des matériaux à bas coefficient de frottement, soit encore par des paliers utilisant un fluide à haute pression tel qu'un palier hydraulique.

La première liaison pivot **32** présente ainsi un logement **32a** relié à la structure de référence **3** et un arbre tournant **32b** dont la position angulaire est détectée par un codeur **16** relativement à cette structure de référence **3.** La deuxième liaison pivot **33** est réalisée par un arbre **33a** monté dans un logement **33b** qui est porté par une platine **35** sur laquelle est fixée également l'extrémité encastrée **32c** de l'arbre tournant **32b.** Le logement **33b** est monté de manière réglable sur la platine **35** de manière à permettre de régler l'entraxe relatif entre les arbres tournants **32b** et **33a.** Un codeur **16** est placé pour détecter la position angulaire de l'arbre tournant **33a** relativement à cette platine **35.**

Un moyen d'actionnement **19₁** assure le mouvement d'abduction qui se déroule en deux temps. La première rotation est effectuée autour de la deuxième liaison pivot **33** depuis 0 à 90 degrés jusqu'à ce que l'extrémité du moyen d'actionnement **19₁** vienne en butée mécanique contre l'extrémité encastrée **32c.** La deuxième rotation s'effectue alors autour de la première liaison pivot **32** sur une course de 90 à 160 degrés.

Le système d'exosquelette **1** vise ensuite à reproduire le mouvement de flexion-extension de l'épaule tel qu'illustré plus précisément aux **Fig. 8A** et **8B.** Un tel degré de liberté de l'articulation biologique est concrétisé par une liaison pivot **38** réalisée par un système de guidage à arbre. Cette liaison pivot **38** comporte un arbre de rotation **38a** monté dans un logement **38b** qui est relié à l'arbre tournant **33a** de la deuxième liaison pivot **33** par l'intermédiaire d'une équerre **39.** L'arbre **38a** est pourvu d'un codeur de position **16.** Le logement **38b** comporte des moyens de réglage de sa position par rapport aux autres liaisons pivot. Un moyen d'actionnement **19₂** agissant sur l'équerre **39** permet de motoriser le mouvement de flexion-extension de l'épaule.

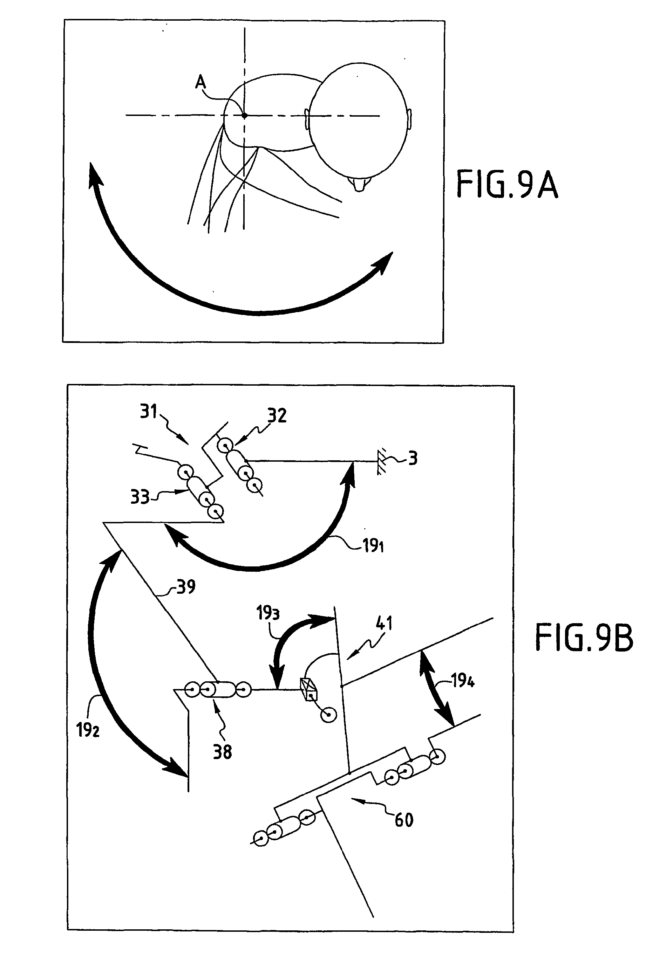

Les **Fig. 9A** et **9B** illustrent le troisième degré de liberté de l'articulation de l'épaule à savoir la rotation longitudinale du bras autour de son axe longitudinal **A.** Ce degré de liberté est concrétisé par l'intermédiaire d'une liaison pivot **41** réalisée par un système de guidage sans arbre. Comme rappelé ci-dessus, au moins un système de guidage sans arbre s'impose pour une articulation comportant au moins trois degrés de liberté en raison de l'encombrement de réalisation des différentes liaisons pivot.

Le système de guidage sans arbre **41** est constitué par au moins un tronçon de rail circulaire **43** centré sur un axe matérialisant l'axe de rotation longitudinal **A** du bras autour de son axe. Ce tronçon de rail **43** assure le guidage en rotation autour de l'axe **A** d'au moins un patin mobile **44** supportant le logement **38b** de l'arbre appartenant à la troisième liaison pivot **38.** Le patin mobile **44** est réglable angulairement par rapport à la liaison pivot **38.** Un tel patin **44** est équipé d'interfaces de glissement en matériaux à bas coefficient de frottement, d'éléments de roulement telles que des billes, rouleaux, aiguilles ou roulements à billes. Le patin **44** est équipé d'un codeur **16** permettant de connaître sa position autour de l'axe **A.** Par exemple, ce codeur **16** comporte un pignon **45** s'engrénant avec une crémaillère **46** porté par le rail de guidage circulaire **43.** Le mouvement de rotation longitudinale du bras autour de son axe longitudinal **A** est assuré par des moyens d'actionnement **19₃.**

Ce rail de guidage **43** est porté par un segment mécanique **4₁** constitué sous la forme d'un longeron vertical **49** portant une glissière **50** sur laquelle est montée une fourchette **51** portant l'articulation mécanique du coude. La possibilité de réglage en coulissement de la glissière **50** par rapport au longeron vertical **49** permet un réglage de l'entraxe entre l'articulation de l'épaule et l'articulation du coude.

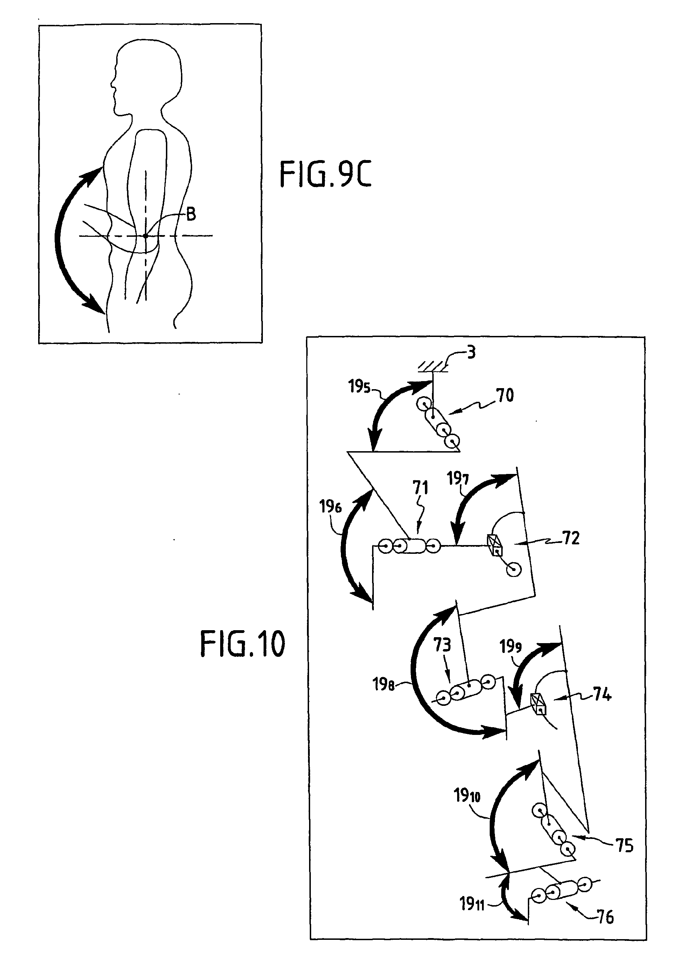

Tel que cela apparaît plus précisément à la **Fig. 9C,** le système d'exosquelette vise ensuite à concrétiser la rotation de l'avant-bras autour de l'axe **B** du coude par l'intermédiaire d'une liaison pivot **60.** Cette liaison pivot **60** est réalisée par un système de guidage à arbre comportant, dans l'exemple illustré deux logements **61** portés par les extrémités de la fourchette **51** et dans lequel sont logés deux demi-arbres **62** montés coaxialement l'un à l'autre et reliés à une demi-coque de support **64** pour l'avant-bras faisant partie d'un segment mécanique **4₂.** Le mouvement de rotation du coude autour de l'axe **62** est assuré par des moyens d'actionnement **19₄.** Un codeur **16** permet de déterminer la position de rotation de l'axe **62.** La demi-coque **64** supporte un longeron inférieur **65** qui est monté de préférence, de manière réglable sur la demi-coque **64.** Il est à noter que dans ce cas, la liaison pivot **60** est concrétisée par deux liaisons pivot partielles coaxiales.

Il ressort de la description qui précède que le système d'exosquelette **1** selon l'invention permet de respecter au mieux les mouvements bio-mécaniques de chaque segment biologique de la personne en positionnant en correspondance de chaque articulation biologique, une articulation mécanique **8** reliée avec la structure de référence **3** ou avec une autre articulation mécanique **8** par l'intermédiaire d'un segment mécanique **4.** Dans l'exemple de réalisation décrit aux **Fig. 5** et **6,** le système d'exosquelette **1** comporte en tant qu'articulation mécanique **8,** la liaison pivot glissant radialement **31,** la liaison pivot **38,** la liaison pivot **41** et la liaison pivot **60.** De même, le système d'exosquelette **1** comporte en tant que segment mécanique **4,** à partir de la structure de référence **3,** l'équerre **39,** le segment mécanique 4₁ (composé du longeron vertical **49,** de la glissière **50** et de la fourchette **51),** le segment mécanique **4₂** composé de la demi-coque de support **64** et du longeron inférieur **65.**

Les moyens d'actionnement **19, 19₁, 19₂,** ... sont de préférence du type pneumatique. Ces moyens d'actionnement peuvent être constitués par des vérins linéaires à double ou simple effet ou par des vérins rotatifs à double effet. Selon une variante préférée de réalisation, les moyens d'actionnement sont réalisés par des actionneurs simples effets nommés muscles pneumatiques tels que ceux commercialisés par la société FESTO sous les références MAS. Selon cet exemple de réalisation incluant des moyens d'actionnement du type pneumatique, la source d'énergie **28** alimente un compresseur pneumatique qui alimente lui-même les moyens de pilotage **20.** Ces moyens de pilotage **20** alimentent eux-mêmes en débit proportionnel et en pression proportionnelle les moyens d'actionnement pneumatiques. Ce compresseur pneumatique peut être porté par la structure porteuse exosquelettique **2** ou être situé à proximité en étant raccordé aux moyens de pilotage **20** par un faisceau d'alimentation.

Le système d'exosquelette **1** décrit ci-dessus vise à assurer l'assistance des deux premiers segments biologiques du membre supérieur d'une personne. Bien entendu le système d'exosquelette selon l'invention peut être adapté pour assurer l'assistance d'un segment et d'une manière plus générale, des autres segments biologiques du membre inférieur d'une personne. Selon cette variante de réalisation, le système d'exosquelette selon l'invention se présente comme la succession hiérarchique des mouvements suivants : l'abduction de la hanche, la flexion-extension de la hanche, la rotation de la jambe autour de son axe longitudinal au niveau de la hanche, la flexion-extension du genou, la rotation de la jambe autour de son axe longitudinal au niveau du genou, l'abduction/adduction du pied et la flexion-extension du pied. Ainsi tel que cela ressort plus précisément de la **Fig. 10,** la structure porteuse exosquelettique **2** comporte successivement à partir de la structure de référence **3 :**
- une liaison pivot **70** réalisée par un système de guidage à arbre et matérialisant le degré de liberté correspondant à l'abduction de la hanche,
- une liaison pivot **71** réalisée par un système de guidage à arbre et matérialisant le degré de liberté correspondant à la flexion-extension de la hanche,
- une liaison pivot **72** réalisée par un système de guidage sans arbre et correspondant au degré de liberté de rotation de la jambe autour de son axe longitudinal au niveau de la hanche,
- une liaison pivot **73** réalisée par un système de guidage à arbre et correspondant au degré de liberté de la flexion-extension du genou,
- une liaison pivot **74** réalisée par un système de guidage sans arbre et correspondant au degré de liberté de rotation de la jambe autour de son axe longitudinal au niveau du genou,
- une liaison pivot **75** réalisée par un système de guidage à arbre et correspondant au degré de liberté de l'abduction/adduction du pied,
- une liaison pivot **76** réalisée par un système de guidage à arbre et correspondant au degré de liberté de la flexion-extension du pied.

Les mouvements d'abduction de la hanche, de flexion-extension de la hanche, de rotation de la jambe autour de son axe longitudinal au niveau de la hanche, de flexion-extension du genou, de rotation de la jambe autour de son axe longitudinal au niveau du genou, d'abduction/adduction du pied et de flexion-extension du pied sont assurés par des moyens d'actionnement respectivement **19**₅ à **19**₁₁.

Comme expliqué dans la description qui précède, la structure porteuse exosquelettique **1** est équipée de moyens **7** d'adaptation au segment biologique du membre à assister.

Selon un autre aspect de l'objet de l'invention, le système d'exosquelette **1** est équipé de moyens d'adaptation **7** conçus pour permettre une mise en place facile et sûre du ou des segments biologiques de la personne tout en assurant une captation efficace des mouvements ou des volontés de mouvement des segments biologiques de la personne.

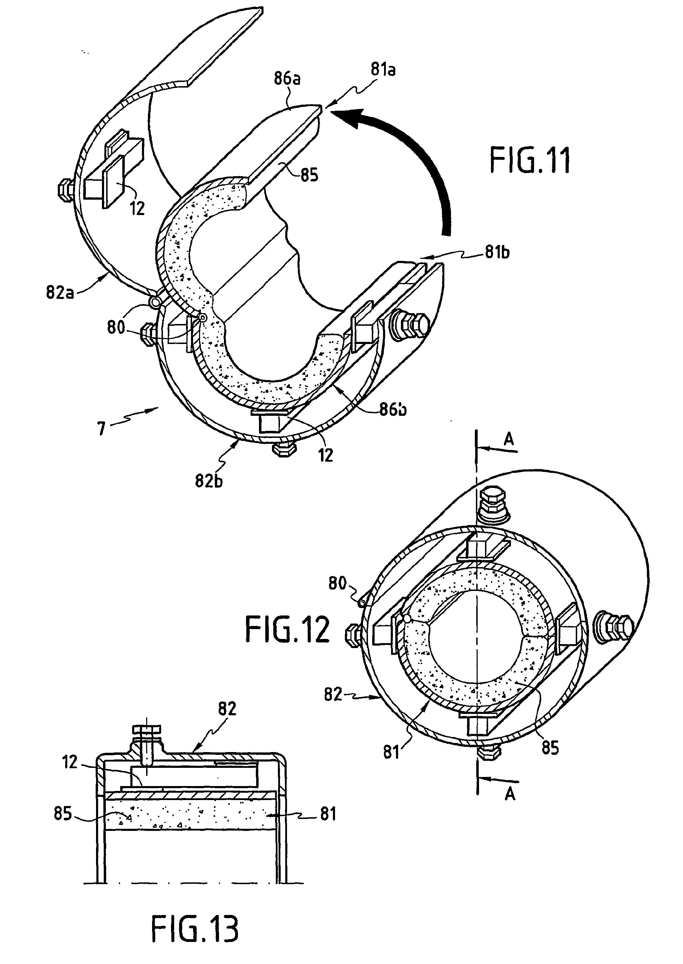

Tel que cela ressort plus précisément des **Fig. 11** à **13,** ces moyens d'adaptation **7** se présentent sous la forme d'un bracelet s'ouvrant selon un axe **80** s'étendant selon une direction sensiblement parallèle à l'axe du segment biologique pour permettre d'assurer la mise en place et le retrait facile du segment biologique correspondant. Un tel bracelet **7** comporte une partie mobile **81** reliée à un segment biologique **S_{b}** et une partie fixe ou de référence **82** liée par tout moyen approprié, à la structure porteuse et plus précisément à un segment mécanique **4.** Ainsi, dans l'exemple illustré aux **Fig. 5** et **6,** la partie fixe **82** de chaque bracelet **7** est fixée respectivement sur une glissière **50** et **65.**

La partie fixe **82** et la partie mobile **81** sont sensiblement concentriques et constituées chacune de deux demi-coques respectivement **82a - 82b** et **81a - 81b** articulées axialement entre-elles selon un axe **80.** Chaque demi-coque **81a - 81b** de la partie mobile supporte une membrane adaptable **85,** par exemple gonflable, destinée à être en contact avec le segment biologique et à s'adapter à la morphologie du segment biologique. La membrane adaptable **85** vient ainsi enserrer un segment biologique lorsque le bracelet **7** est fermé. Il est à considérer que la membrane adaptable enserre au mieux le segment biologique nu ou recouvert d'un vêtement.

Chaque partie fixe **82** est équipée de jauges de contrainte **12** montées en opposition. Dans l'exemple illustré, la partie fixe **82** est équipée de quatre jauges de contraintes **12** décalées angulairement de 90 degrés de manière à former deux paires en opposition. Les jauges de contrainte **12** sont destinées à venir en appui sur une plaque support **86a - 86b** faisant partie des deux demi-coques mobiles et supportant la membrane adaptable **85.**

Le bracelet **7** décrit ci-dessus comporte ainsi par la membrane adaptable **85,** une sorte de bracelet mobile intérieur qui reçoit les amorces de mouvements générées par le membre. Un tel bracelet intérieur permet de mettre sous contrainte les jauges de contraintes **12** qui se déforment proportionnellement à la pression exercée par la partie mobile.

Il est à noter que le bracelet **7** peut être doté d'un degré de liberté supplémentaire afin de permettre la rotation, autour de l'axe longitudinal, entre le bracelet intérieur ***81** et la partie fixe **82.**

L'objet de l'invention a été décrit plus précisément pour un système d'exosquelette assistant un membre biologique. Il est clair que la même structure exosquelettique **2** peut être appliquée à l'assistance, le soutien et la motorisation du tronc et/ou du bassin d'une personne. Cette structure exosquelettique est articulée, de la même manière que l'exosquelette de membre, par des liaisons pivot en coïncidence avec les degrés de liberté de cet ensemble. Sur cette structure exosquelettique, dont le bassin est assimilé à la structure fixe et le tronc à un segment biologique ou vice-versa, un ou plusieurs systèmes d'exosquelette de membres selon l'invention peuvent être assemblés par leurs structures de référence **3** pour former un assemblage exosquelettique adapté aux différents membres d'une personne. Cet assemblage peut alors constituer une structure exosquelettique complète ou partielle pour assurer de manière complète ou partielle, le soutien et la motricité de divers segments biologiques d'une personne.

L'invention n'est pas limitée aux exemples décrits et représentés car diverses modifications peuvent y être apportées sans sortir de son cadre.

## Revendications

1. Système d'exosquelette **(1)** assurant l'assistance en soutien et motricité d'au moins un segment biologique (**S_{b}**) d'une personne, le système comportant :
- une structure porteuse exosquelettique **(2)** équipée de moyens d'adaptation **(7)** sur la personne et composée d'une structure de référence **(3)** et d'au moins un segment mécanique **(4)** relié à la structure de référence par une articulation mécanique **(8),**
- des moyens **(11)** d'acquisition des mouvements des segments biologiques,
- des moyens **(15)** d'acquisition de la position spatiale des segments mécaniques **(4)** par rapport à la structure de référence **(3),**
- des moyens d'actionnement **(19)** assurant la motricité des segments mécaniques articulés,
- et des moyens de commande **(17)** reliés en entrée aux moyens d'acquisition de mouvements et de positions, et en sortie aux moyens d'actionnement pour assurer leur pilotage,
**caractérisé en ce que** :
• lesdits moyens **(11)** d'acquisition des mouvements acquièrent aussi les volontés de mouvements et sont constitués par des moyens de mesure en fonction du temps, de l'effort provenant d'au moins un segment biologique et des moyens de détection en fonction du temps, de la direction des mouvements ou volontés de mouvements de ces segments,
• lesdits moyens de commande **(17)** comportent :
* des paramètres d'asservissement propres à la personne et à son champ d'activités, et des paramètres propres à la configuration de l'exosquelette,
* des moyens de traitement qui, en fonction desdits paramètres et des informations issues desdits moyens d'acquisition des mouvements ou volontés de mouvements, déterminent proportionnellement, des caractéristiques de vitesse, d'accélération, de décélération et d'effort pour lesdits moyens d'actionnement **(19),**
* et des moyens de pilotage permettant de commander lesdits moyens d'actionnement, selon des caractéristiques de vitesse, d'accélération, de décélération et d'effort préalablement déterminés par lesdits moyens de traitement.

2. Système d'exosquelette selon la revendication 1 **caractérisé en ce que** les paramètres d'asservissement propres à la personne et à son champ d'activités comportent les caractéristiques biomécaniques et pathologiques de la personne afin de déterminer les facteurs de proportionnalité d'amplification de motricité, et éventuellement d'atténuation, voire de suppression des mouvements involontaires.

3. Système d'exosquelette selon la revendication 1 ou 2 **caractérisé en ce que** les paramètres d'asservissement comportent des coefficients de limitation d'amplitude des mouvements de la personne.

4. Système d'exosquelette selon la revendication 1, **caractérisé en ce que** chaque articulation mécanique **(8)** liant deux segments mécaniques **(4)** ou un segment mécanique **(4)** par rapport à la structure de référence **(3)** comporte :
- des moyens de réglage de sa position par rapport à la structure de référence ou à un autre segment, afin de permettre son positionnement en correspondance de l'articulation biologique,
- pour chaque articulation mécanique **(8)** correspondant à une articulation biologique à l'exception de celle de l'épaule, autant de liaison pivot que l'articulation biologique comporte de degrés de liberté,
- pour l'articulation mécanique **(8)** correspondant à l'articulation de l'épaule, quatre degrés de liberté réalisés par deux liaisons pivot et une liaison pivot glissant radialement **(31).**

5. Système d'exosquelette selon la revendication 4, **caractérisé en ce que** chaque liaison pivot est réalisée par un système de guidage à arbre ou par un système de guidage sans arbre.

6. Système d'exosquelette selon les revendications 4 et 5, **caractérisé en ce que** chaque articulation **(8)** d'un segment mécanique **(4)** est pourvue, pour chaque degré de liberté d'une articulation biologique à au moins trois degrés de liberté, d'au moins une liaison pivot réalisée par un système de guidage sans arbre, tandis que les autres liaisons pivot sont réalisées chacune par un système de guidage à arbre.

7. Système d'exosquelette selon la revendication 6, **caractérisé en ce qu'**un système de guidage sans arbre **(41)** est réalisé par au moins un tronçon de rail circulaire assurant le guidage d'au moins un patin mobile.

8. Système d'exosquelette selon la revendication 4, **caractérisé en ce que** la liaison pivot glissant radialement **(31)** est composée soit de plusieurs axes de rotation successifs permettant de restituer une trajectoire proche de celle du glissement de l'axe de rotation biologique soit d'un guide doté d'une empreinte dans laquelle l'axe de la liaison pivot décrit une trajectoire semblable à ce glissement.

9. Système d'exosquelette selon la revendication 1, **caractérisé en ce que** les moyens d'acquisition des mouvements ou volontés de mouvements **(11)** comportent :
- des jauges de contraintes **(12)** montées en opposition sur une partie fixe **(13)** liée à la structure porteuse, en étant sollicitées par une partie mobile **(14)** reliée à un segment biologique,
- et/ou des moyens de mesure des stimuli neuromusculaires envoyés par la personne à ses muscles.

10. Système d'exosquelette selon la revendication 9, **caractérisé en ce que** la partie fixe **(13)** et la partie mobile **(14)** sont concentriques et constituées chacune de deux demi-coques articulées axialement entre elles pour permettre l'insertion radiale d'un segment biologique.

11. Système d'exosquelette selon la revendication 10, **caractérisé en ce que** chaque demi-coque de la partie mobile **(14)** supporte une membrane adaptable **(85)** destinée à être en contact avec le segment biologique et à s'adapter à la morphologie dudit segment biologique.

12. Système d'exosquelette selon la revendication 1, **caractérisé en ce que** les moyens d'actionnement **(19)** sont constitués par des muscles pneumatiques ou par des vérins linéaires pneumatiques.

13. Système d'exosquelette selon la revendication 1, **caractérisé en ce que** la structure porteuse **(2)** comporte des butées réglables de limitation de l'amplitude de déplacement des segments mécaniques articulés.

14. Système d'exosquelette selon la revendication 1, **caractérisé en ce que** les moyens de commande **(17)** comportent des moyens programmés permettant de piloter le fonctionnement de la structure porteuse exosquelettique selon des séquences déterminées.

15. Système d'exosquelette selon la revendication 1, **caractérisé en ce que** les moyens de commande **(17)** sont reliés à des interfaces d'entrée-sortie **(27)** permettant de piloter et de surveiller notamment à distance le fonctionnement dudit système d'exosquelette.

16. Système d'exosquelette selon la revendication 1, **caractérisé en ce qu'**au moins un segment mécanique **(4)** ou bien la structure de référence **(3)** est équipé de moyens de montage pour des structures additionnelles.

17. Système d'exosquelette selon l'une des revendications 1 à 16, **caractérisé en ce qu'**il comporte une source d'énergie **(28)** alimentant les moyens de commande, d'acquisition et d'actionnement, portée par la structure porteuse exosquelettique et se présentant sous une forme stockable telle qu'une batterie ou une pile à combustible ou étant située à proximité de celle-ci pour l'alimenter par le biais d'un faisceau de raccordement ou par induction.

18. Système d'exosquelette selon l'une des revendications 1 à 17, **caractérisé en ce que** la structure porteuse exosquelettique **(2)** assure l'assistance d'un segment biologique d'un membre, du tronc ou du bassin d'une personne.

19. Assemblage exosquelettique comportant plusieurs systèmes d'exosquelettes pour des segments biologiques, conformes à l'une des revendications 1 à 18 et assemblés par leur structure de référence, sur une structure d'exosquelette de tronc et/ou de bassin afin de constituer une structure exosquelettique partielle ou complète assurant de manière partielle ou complète, le soutien et la motricité de divers segments biologiques d'une personne.

## Claims

1. - An exoskeletal system **(1)** providing assistance in terms of support and motor-power for at least one biological segment **(S_{b})** of a person, where this system has:
- an exoskeletal weight-bearing structure **(2)** equipped with resources for adaptation **(7)** onto the person, and composed of a reference structure **(3)** and at least one mechanical segment **(4)** connected to the reference structure by a mechanical articulation **(8),**
- resources **(11)** for acquiring the movements of the biological segments,
- resources **(15)** for acquiring the spatial position of the mechanical segments **(4)** in relation to the reference structure **(3),**
- operating resources **(19)** providing motor-power to the articulated mechanical segments,
- and control resources **(17)** connected at their inputs to the movement and position acquisition resources, and at their outputs to the operating resources, in order to control them,
**characterised in that**:
• the said resources **(11)** for acquiring the movements also acquire the movement intentions, and are composed of resources for time related measurement of the effort coming from at least one biological segment and time-dependent resources for detecting the direction of the movements or movement intentions of these segments,
• the said control resources **(17)** include:
* control parameters applicable to the person and to the field of activities, and parameters applicable to the configuration of the exoskeleton,
* processing resources which, according to the said parameters and the information coming from the resources for acquiring movements or movement intentions, proportionately determine characteristics relating to speed, acceleration, deceleration and effort for the said operating resources **(19),**
* and control resources used to control the said operating resources, in accordance with characteristics of speed, acceleration, deceleration and effort determined beforehand by the said processing resources.

2. - An exoskeletal system according to claim 1, **characterised in that** the control parameters applicable to the person and to the field of activities include the biomechanical and pathological characteristics of the person, in order to determine the proportionality factors of motor-power amplification, and attenuation where appropriate, or even removal of the involuntary movements.

3. - An exoskeletal system according to claim 1 or 2, **characterised in that** the control parameters include coefficients for limiting the amplitude of the person's movements.

4. - An exoskeletal system according to claim 1, **characterised in that** each mechanical articulation **(8)** connecting two mechanical segments **(4)** or one mechanical segment **(4)** in relation to the reference structure **(3)** includes:
- resources for the adjustment of its position in relation to the reference structure or another segment, in order to enable it to be positioned in relation to the biological articulation,
- for each mechanical articulation **(8)** corresponding to a biological articulation, with the exception of that of the shoulder, as many pivot links as the biological articulation has degrees of freedom,
- for the mechanical articulation **(8)** corresponding to the articulation of the shoulder, four degrees of freedom implemented by two pivot links and a radially-sliding pivot link **(31).**

5. - An exoskeletal system according to claim 4, **characterised in that** each pivot link is implemented by a shafted guidance system or by a shaftless guidance system.

6. - An exoskeletal system according to claims 4 and 5, **characterised in that** each articulation **(8)** of a mechanical segment **(4)** is equipped, for each degree of freedom of a biological articulation, with at least three degrees of freedom, and at least one pivot link implemented by a shaftless guidance system, while the other pivot links are each implemented by a shafted guidance system.

7. - An exoskeletal system according to claim 6, **characterised in that** a shaftless guidance system **(41)** is implemented by at least one circular rail section providing guidance for at least one mobile slide.

8. - An exoskeletal system according to claim 4, **characterised in that** the radially-sliding pivot link **(31)** is composed of several successive axes of rotation used to reproduce a trajectory close to that of the slide of the biological axis of rotation or of a guide equipped with a template in which the axis of the pivot link describes a trajectory similar to this slide.

9. - An exoskeletal system according to claim 1, **characterised in that** the resources for acquiring the movement or the movement intentions **(11)** include:
- stress gauges **(12)** mounted in opposition on a fixed part **(13)** connected to the weight-bearing structure, these being driven by a mobile part **(14)** connected to a biological segment,
- and/or resources for measuring the neuro-muscular stimuli sent by the person to his or her muscles.

10. - An exoskeletal system according to claim 9, **characterised in that** the fixed part **(13)** and the mobile part **(14)** are concentric and each composed of two half-shells articulated axially to each other to allow the radial insertion of a biological segment.

11. - An exoskeletal system according to claim 10, **characterised in that** each half-shell of the mobile part **(14)** supports an adaptable membrane **(85)** designed to be in contact with the biological segment and to be adapted to the morphology of the said biological segment.

12. - An exoskeletal system according to claim 1, **characterised in that** the operating resources **(19)** are composed of pneumatic muscles or linear pneumatic actuators.

13. - An exoskeletal system according to claim 1, **characterised in that** the weight-bearing structure **(2)** includes adjustable end-stops for limiting the amplitude of movement of the articulated mechanical segments.

14. - An exoskeletal system according to claim 1, **characterised in that** the control resources **(17)** include programmed resources used to control the operation of the exoskeletal weight-bearing structure in accordance with specified sequences.

15. - An exoskeletal system according to claim 1, **characterised in that** the control resources **(17)** are connected to input-output interfaces **(27)** used to control and oversee, remotely in particular, the operation of the said exoskeletal system.

16. **-** An exoskeletal system according to claim 1, **characterised in that** at least one mechanical segment **(4)** or indeed the reference structure **(3)** is fitted with mounting resources for additional structures.

17. **-** An exoskeletal system according to one of claims 1 to 16, **characterised in that** it includes an energy source **(28)** feeding the control, acquisition and activation resources, carried by the exoskeletal weight-bearing structure and assuming a storable form such as a battery or a fuel cell, or located close to the latter in order to supply it by means of a connection harness or by induction.

18. - An exoskeletal system according to one of claims 1 to 17, **characterised in that** the exoskeletal weight-bearing structure **(2)** provides assistance to a biological segment of a limb, or the trunk or pelvis of a person.

19. - An exoskeletal assembly with several exoskeleton systems for biological segments, according to one of claims 1 to 18, and assembled by their reference structure onto an exoskeleton structure for the trunk and/or the pelvis, in order to constitute a partial or complete exoskeletal structure support and motor-power for miscellaneous biological segments of a person, either partially of completely.

## Patentansprüche

1. Exoskelettsystem (1), das die Hilfe bei Stützung und Motorik wenigstens eines biologischen Segments (S_{b}) einer Person sicherstellt, wobei das System umfaßt:
- eine Exoskeletträgerstruktur (2), die mit Mitteln zur Anpassung (7) an die Person ausgerüstet ist und aus einer Referenzstruktur (3) und wenigstens einem mechanischen Segment (4) zusammengesetzt ist, welches mit der Referenzstruktur durch ein mechanisches Gelenk (8) verbunden ist,
- Mittel (11) zum Erfassen der Bewegungen der biologischen Segmente,
- Mittel (15) zum Erfassen der räumlichen Position der mechanischen Segmente (4) im Verhältnis zur Referenzstruktur (3),
- Betätigungsmittel (19), die die Motorik der gelenkig gelagerten mechanischen Segmente sicherstellen,
- und Steuermittel (17), die mit den Mitteln zum Erfassen von Bewegungen und Positionen und am Ausgang mit Betätigungsmitteln verbunden sind, um deren Steuerung sicherzustellen,
**dadurch gekennzeichnet, daß**:
• die Mittel (11) zum Erfassen der Bewegungen auch die Bewegungswünsche erfassen und bestehen aus Mitteln zur zeitabhängigen Messung der Kraft, die von wenigstens einem biologischen Segment kommt, und Mitteln zur zeitabhängigen Detektion der Richtung der Bewegungen oder Bewegungswünsche dieser Segmente,
• wobei die Steuermittel (17) umfassen:
* der Person und ihrem Aktivitätsbereich eigene Steuerparameter und der Exoskelettkonfiguration eigene Parameter,
* Bearbeitungsmittel, die in Abhängigkeit der Parameter und der Informationen aus den Mitteln zur Erfassung der Bewegungen oder Bewegungswünsche proportional Merkmale von Geschwindigkeit, Beschleunigung, Verlangsamung und Kraft für die Betätigungsmittel (19) bestimmen,
* und Mittel zur Steuerung, die es erlauben, die Betätigungsmittel gemäß den Merkmalen von Geschwindigkeit, Beschleunigung, Verlangsamung und Kraft, welche durch die Bearbeitungsmittel vorbestimmt sind, zu steuern.

2. Exoskelettsystem nach Anspruch 1, **dadurch gekennzeichnet, daß** die der Person und ihrem Aktivitätsfeld eigenen Steuerparameter die biomechanischen und pathologischen Merkmale der Person umfassen, um Proportionalitätsfaktoren zur Verstärkung einer Motorik und gegebenenfalls zur Dämpfung, sogar zur Unterdrückung ungewollter Bewegungen zu bestimmen.

3. Exoskelettsystem nach Anspruch 1 oder 2, **dadurch gekennzeichnet, daß** die Steuerparameter Koeffizienten zur Begrenzung einer Amplitude der Bewegungen der Person umfassen.

4. Exoskelettsystem nach Anspruch 1, **dadurch gekennzeichnet, daß** jedes mechanische Gelenk (8), das zwei mechanische Segmente (4) oder ein mechanisches Segment (4) bezüglich der Referenzstruktur (3) verbindet, umfaßt:
- Mittel zur Regelung seiner Position bezüglich der Referenzstruktur oder einem anderen Segment, um seine Positionierung entsprechend dem biologischen Gelenk zu erlauben,
- für jedes mechanische Gelenk (8), das einem biologischen Gelenk entspricht, mit Ausnahme von jenem der Schulter, soviel Gelenkverbindungen wie das biologische Gelenk an Freiheitsgraden umfaßt,
- für das mechanische Gelenk (8), das dem Gelenk der Schulter entspricht, vier Freiheitsgrade, die durch zwei Gelenkverbindungen und eine radial gleitende Gelenkverbindung (31) ausgeführt sind.

5. Exoskelettsystem nach Anspruch 4, **dadurch gekennzeichnet, daß** jede Gelenkverbindung durch ein Führungssystem mit einer Welle oder durch ein Führungssystem ohne Welle ausgeführt ist.

6. Exoskelettsystem nach den Ansprüche 4 und 5, **dadurch gekennzeichnet, daß** jedes Gelenk (8) eines mechanischen Segments (4) für jeden Freiheitsgrad eines biologischen Gelenks mit wenigstens drei Freiheitsgraden ausgestattet ist mit wenigstens einer Gelenkverbindung, die durch ein Führungssystem ohne Welle ausgeführt ist, während die anderen Gelenkverbindungen jede durch ein Führungssystem mit Welle ausgeführt sind.

7. Exoskelettsystem nach Anspruch 6, **dadurch gekennzeichnet, daß** ein Führungssystem ohne Welle (41) durch wenigstens einen Kreisschienenabschnitt ausgeführt ist, der die Führung wenigstens einer beweglichen Kufe sicherstellt.

8. Exoskelettsystem nach Anspruch 4, **dadurch gekennzeichnet, daß** die radial gleitende Gelenkverbindung (31) entweder aus mehreren aufeinanderfolgenden Rotationsachsen besteht, die es ermöglichen, eine Bahn nahe jener des Gleitens der biologischen Rotationsachse oder eine Führung zu bilden, die mit einer Vertiefung ausgestattet ist, in welcher die Gelenkachse eine Bahn ähnlich zu diesem Gleiten beschreibt.

9. Exoskelettsystem nach Anspruch 1, **dadurch gekennzeichnet, daß** die Mittel zur Erfassung der Bewegungen oder Bewegungswünsche (11) umfassen:
- Kraftmaße (12), die gegenüberstehend auf einem festen Teil (13), verbunden mit der Trägerstruktur, angebracht sind, indem sie mit einem beweglichen Teil (14), das mit einem biologischen Segment verbunden ist, befestigt werden,
- und/oder Meßmittel der neuromuskularen Stimuli, die durch die Person zu ihren Muskeln geschickt werden.

10. Exoskelettsystem nach Anspruch 9, **dadurch gekennzeichnet, daß** der feste Teil (13) und der bewegliche Teil (14) konzentrisch sind und jeder aus zwei Halbschalen besteht, die axial zueinander gelagert werden, um den radialen Einschub eines biologischen Segments zu erlauben.

11. Exoskelettsystem nach Anspruch 10, **dadurch gekennzeichnet, daß** jede Halbschale des beweglichen Teils (14) eine anpaßbare Membran (85) trägt, die vorgesehen ist, mit dem biologischen Segment in Kontakt zu stehen und sich der Morphologie des biologischen Segments anzupassen.

12. Exoskelettsystem nach Anspruch 1, **dadurch gekennzeichnet, daß** die Betätigungsmittel (19) aus pneumatischen Muskeln oder aus linear-pneumatischen Zylindern bestehen.

13. Exoskelettsystem nach Anspruch 1, **dadurch gekennzeichnet, daß** die Trägerstruktur (2) regelbare Anschläge zur Begrenzung der Amplitude einer Bewegung der gelenkig gelagerten mechanischen Segmente umfaßt:

14. Exoskelettsystem nach Anspruch 1, **dadurch gekennzeichnet, daß** die Steuermittel (17) programmierte Mittel umfassen, die es erlauben, die Funktion der Exoskeletträgerstruktur gemäß bestimmter Sequenzen zu steuern.

15. Exoskelettsystem nach Anspruch 1, **dadurch gekennzeichnet, daß** die Steuermittel (17) mit Eingangs-Ausgangs-Schnittstellen (27) verbunden sind, die es erlauben, die Funktion des Exoskelettsystems zu steuern und zu überwachen, insbesondere von Ferne zu steuern und zu überwachen.

16. Exoskelettsystem nach Anspruch 1, **dadurch gekennzeichnet, daß** wenigstens ein mechanisches Segment (4) oder die Referenzstruktur (3) mit Montiermitteln für zusätzliche Strukturen versehen ist.

17. Exoskelettsystem nach einem der Ansprüche 1 bis 16, **dadurch gekennzeichnet, daß** es eine Energiequelle (28) umfaßt, die die Mittel zur Steuerung, Erfassung und Betätigung versorgt, die durch die Exoskeletträgerstruktur getragen sind, und welche in Form eines Speichers vorliegt wie eine Batterie oder eine Brennstoffzelle oder in der Nähe von jener angeordnet ist, um sie durch ein Anschlußleitungsbündel oder durch Induktion zu versorgen.

18. Exoskelettsystem nach einem der Ansprüche 1 bis 17, **dadurch gekennzeichnet, daß** die Exoskeletträgerstruktur (2) die Unterstützung eines biologischen Segments eines Glieds, eines Abschnitts oder des Beckens einer Person sicherstellt.

19. Exoskelettsystem, das mehrere Exoskelettsysteme für biologische Segmente nach einem der Ansprüche 1 bis 18 umfaßt, und welche durch deren Referenzstruktur zusammengefügt sind, auf einer Exoskelettstruktur eines Rumpfes und/oder eines Beckens, um eine partielle oder vollständige Exoskelettstruktur zu bilden, die partiell oder vollständig die Stützung und die Motorik von verschiedenen biologischen Segmenten einer Person sicherstellt.
